# EUROPEAN PATENT APPLICATION

(11) **EP 2 611 170 A1**
(43) Date of publication of application: **03.07.2013**
(21) Application number: 11819965.2
(22) Date of filing: 18.08.2011
(51) Int. Cl.: H04N 13/02, G03B 35/08

(54) **STEREOGRAPHY DEVICE AND STEREOGRAPHY METHOD**

(30) Priority: 24.08.2010 JP 2010187017
(71) Applicant: NEC Corporation, Tokyo 108-8001 (JP)
(72) Inventor: MURAMATSU, Eiji, Tokyo 108-8001 (JP)
(74) Representative: Vossius & Partner
(86) International application number: PCT/JP2011/069102
(87) International publication number: WO 2012/026502

(57) **Abstract**

In the stereography device, the stereography is unavailable if the specifications of a plurality of image pickup units differ from each other, therefore, a stereography device according to an exemplary aspect of the invention includes a first photographing unit; a second photographing unit whose optical specification is different from that of the first photographing unit; and an operational processing unit; wherein each of the first photographing unit and the second photographing unit outputs a first photographed image and a second photographed image with respect to a target to be photographed including an identical object; the first photographed image has a first image property determined by an optical specification of the first photographing unit; the second photographed image has a second image property determined by an optical specification of the second photographing unit; the operational processing unit includes an image processing unit; and the image processing unit performs a correction process so that a difference between the first image property and the second image property may be minimized.

## Description

### TECHNICAL FIELD

The present invention relates to stereography devices and stereography methods, and, in particular, to a stereography device and a stereography method including a plurality of photographing units.

### BACKGROUND ART

In recent years, a stereography device has been developed which enables stereographic photography of a subject using a plurality of photographing units. In order to obtain a stereographic image, it is desirable to use a plurality of photographing units (cameras, for example), each of which has an equivalent optical system. This is because human eyes virtually experience stereoscopic effects by visually recognizing the images processed by equivalent optical systems with separate eyes of right and left. Accordingly, in the case that a plurality of photographing units are used, it is necessary to suppress a gap between images due to misalignment of optical axes, for example, in the respective image pickup units.

An example of stereography devices including a means for correcting such misalignment of optical axes is disclosed in the Patent Literature 1. The stereography device disclosed in the Patent Literature 1 includes a camera body, two image pickup units (image pickup parts) whose specifications are identical, and an adapter for mounting the image pickup units on the camera body. Then, according to a shift amount of a principal object between two image frames picked up by first and second image pickup units, an axial correction angle for positioning the principal object equally between the image frames optically is determined, and optical axes are adjusted.

In the Patent Literature 2, a stereoscopic photographing device is described which includes a focal distance detecting means for detecting the focal distances of a first and a second photography optical systems, a storage means for storing shift quantity of optical axis centers at each focal distance in advance, and a control means for controlling an image segmenting area on the basis of the output of the storage means. It is said that by this configuration, the deviation of the image at each focal distance can be suppressed which arises in photographing optical systems because of the shift of optical axis centers due to working accuracy of the photographing optical systems.
Patent Literature 1: Japanese Patent Application Laid-Open Publication No. 2008-252254 (paragraphs [0013] and [0017])
Patent Literature 2: Japanese Patent Application Laid-Open Publication No. H08-317424 (paragraphs [0010] and [0148])

### DISCLOSURE OF INVENTION

### PROBLEM TO BE SOLVED BY THE INVENTION

In the related stereography device mentioned above, a stereography is enabled by correcting the shift of optical axis centers due to working accuracy and the like of the optical systems in two image pickup parts whose specifications are identical. However, if the specification information is not equal, then photographing process is ended because the stereography is unavailable (paragraph [0060] and FIG. 8 in the Patent Literature 1). Therefore, in the related stereography devices, there is a problem that the stereography is unavailable if the specifications of a plurality of image pickup units differ from each other.

The object of the present invention is to provide a stereography device and a stereography method which solve the problem mentioned above that the stereography is unavailable if the specifications of a plurality of image pickup units differ from each other.

### MEANS FOR SOLVING A PROBLEM

A stereography device according to an exemplary aspect of the invention includes a first photographing unit; a second photographing unit whose optical specification is different from that of the first photographing unit; and an operational processing unit; wherein each of the first photographing unit and the second photographing unit outputs a first photographed image and a second photographed image with respect to a target to be photographed including an identical object; the first photographed image has a first image property determined by an optical specification of the first photographing unit; the second photographed image has a second image property determined by an optical specification of the second photographing unit; the operational processing unit includes an image processing unit; and the image processing unit performs a correction process so that a difference between the first image property and the second image property may be minimized.

A stereography method according to an exemplary aspect of the invention includes the steps of: obtaining a first photographed image having a first image property and a second photographed image having a second image property different from the first image property, respectively, with respect to a target to be photographed including an identical object; and performing a correction process so as to minimize a difference between the first image property and the second image property.

### EFFECT OF THE INVENTION

According to the stereography device by the present invention, the stereography becomes available even if the specifications of a plurality of image pickup units differ from each other.

### BRIEF DESCRIPTION OF THE DRAWINGS

FIG. 1 is a block diagram showing a configuration of a stereography device in accordance with the first exemplary embodiment of the present invention.
FIG. 2 is a block diagram showing a configuration of a stereography device in accordance with the second exemplary embodiment of the present invention.
FIG. 3 is a schematic view illustrating a difference in an angle of view for photographing in a stereography device in accordance with the second exemplary embodiment of the present invention.
FIG. 4 is a flowchart showing a process for correcting a difference between image properties due to differences in lens systems and photographing elements in a stereography device in accordance with the second exemplary embodiment of the present invention.
FIG. 5 is a schematic view illustrating a misalignment in optical axes in a stereography device in accordance with the second exemplary embodiment of the present invention.
FIG. 6 is a flowchart showing the process for correcting a difference between image properties due to a misalignment in optical axes in a stereography device in accordance with the second exemplary embodiment of the present invention.
FIG. 7 is a schematic view illustrating a difference in a depth of field in a stereography device in accordance with the second exemplary embodiment of the present invention.
FIG. 8 is a flowchart showing the process for correcting a difference between image properties due to a difference in depths of field in a stereography device in accordance with the second exemplary embodiment of the present invention.
FIG. 9 is a schematic view illustrating a difference in aberrations in a stereography device in accordance with the second exemplary embodiment of the present invention.
FIG. 10 is a flowchart showing the process for correcting a difference between image properties due to a difference in aberrations in a stereography device in accordance with the second exemplary embodiment of the present invention.
FIG. 11 is a schematic view illustrating a difference in color properties in a stereography device in accordance with the second exemplary embodiment of the present invention.
FIG. 12 is a flowchart showing the process for correcting a difference between image properties due to a difference in color properties in accordance with the second exemplary embodiment of the present invention.
FIG. 13 is a block diagram showing a configuration of a stereography device in accordance with the third exemplary embodiment of the present invention.
FIG. 14 is a schematic view illustrating a difference in control methods in autofocus control units of a stereography device in accordance with the third exemplary embodiment of the present invention.
FIG. 15 is a flowchart showing the process for correcting a difference between image properties due to a difference in control methods in an autofocus control unit of a stereography device in accordance with the third exemplary embodiment of the present invention.

### DESCRIPTION OF EMBODIMENTS

The exemplary embodiments of the present invention will be described with reference to drawings below.

### [The first exemplary embodiment]

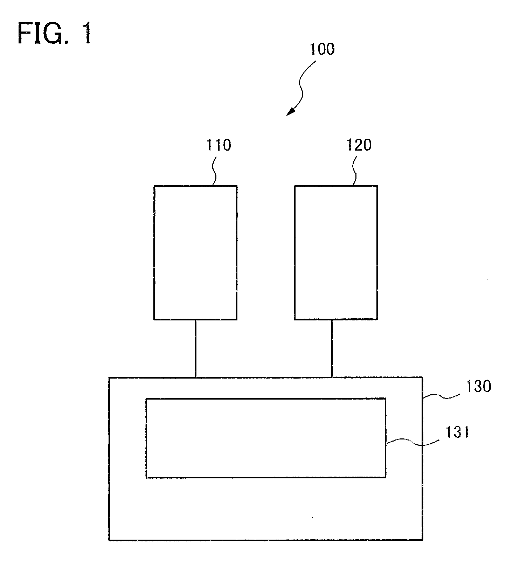

FIG. 1 is a block diagram showing a configuration of a stereography device 100 in accordance with the first exemplary embodiment of the present invention. The stereography device 100 includes a first photographing unit 110, a second photographing unit 120 whose optical specification is different from that of the first photographing unit, and an operational processing unit 130. The first photographing unit 110 and the second photographing unit 120 respectively output a first photographed image and a second photographed image to the operational processing unit 130 with respect to a target to be photographed including an identical object. Here, the first photographed image has a first image property determined by the optical specification of the first photographing unit 110, and the second photographed image has a second image property determined by the optical specification of the second photographing unit 120. The operational processing unit 130 includes an image processing unit 131, and the image processing unit 131 performs a correction process so that a difference between the first image property and the second image property may be minimized.

By adopting such configuration, in the stereography device 100 in the present exemplary embodiment, the stereography becomes available even if the specifications of a plurality of image pickup units differ from each other because a plurality of images uniform in image property are obtained.

A three-dimensional display system in the stereography device 100 is not limited in particular, and any of display systems can be used such as a parallax barrier system, a shutter system, and a lens system. And the process in the operational processing unit 130 may be performed by using a central processing unit (CPU) and a program, or by using specific logic circuit elements.

Next, a case will be described where the stereography device 100 of the present exemplary embodiment is mounted in a portable device.

In recent years, a camera as a photographing device is mounted even in a portable device such as a mobile phone, and significant progress toward a higher pixel count has been made even for such camera. On the other hand, a display device capable of displaying a stereoscopic (hereinafter, also referred to as "three dimensional" or "3D") image is in a developmental stage, and the present number of pixels is equal to about two million (2M) pixels at most that is equivalent to that of a high definition television (HD-TV).

Here, a case is considered where photographing functions of two-dimensional (2D) pictures with high-density pixel and of three-dimensional (3D) pictures are mounted together in a portable device. In this case, it is not necessarily desirable to mount two cameras with high-density pixel because it is caused that the price soars, and the mounting size and the weight increase. In particular, for a portable device such as a cellular phone, the fact that its size is small, its weight is light, and its price is low is important incentives for purchases, therefore it is inadvisable to mount a device whose mounting area is large and cost is high.

On the other hand, if two pixel cameras with low-density pixel optimized for taking three-dimensional pictures are mounted, a high-density pixel image can not be obtained when taking two-dimensional pictures.

Here, it is possible to use the first photographing unit 110 in the stereography device 100 according to the present exemplary embodiment as a high-density pixel photographing unit for 2D photographing, and to use the second photographing unit 120 as a photographing unit for 3D photographing whose optical specifications are different from those of the photographing unit for 2D photographing. That is to say, high-resolution photographing is available for 2D photographing. In 3D photographing, without coordinating the optical systems of the two cameras used for 3D photographing, it becomes possible to generate a 3D image by combining a low-cost and small-sized low-resolution camera with a high-resolution camera for 2D photographing.

Here, a moving-type camera is also available for the second photographing unit 120 used for 3D photographing. For example, it is also possible to use an in-camera mounted in a mobile phone directing it toward the outside of the mobile phone. Further, the mobile phone can adopts another configuration in which the second photographing unit 120 used for 3D photographing can be removed from the body of the mobile phone, and may be provided with an attachment unit capable of adjusting positions.

Thus, according to the present exemplary embodiment, it becomes possible to take three-dimensional pictures even by using a portable device such as a mobile phone where a mounting area is limited and low cost is required.

### [The second exemplary embodiment]

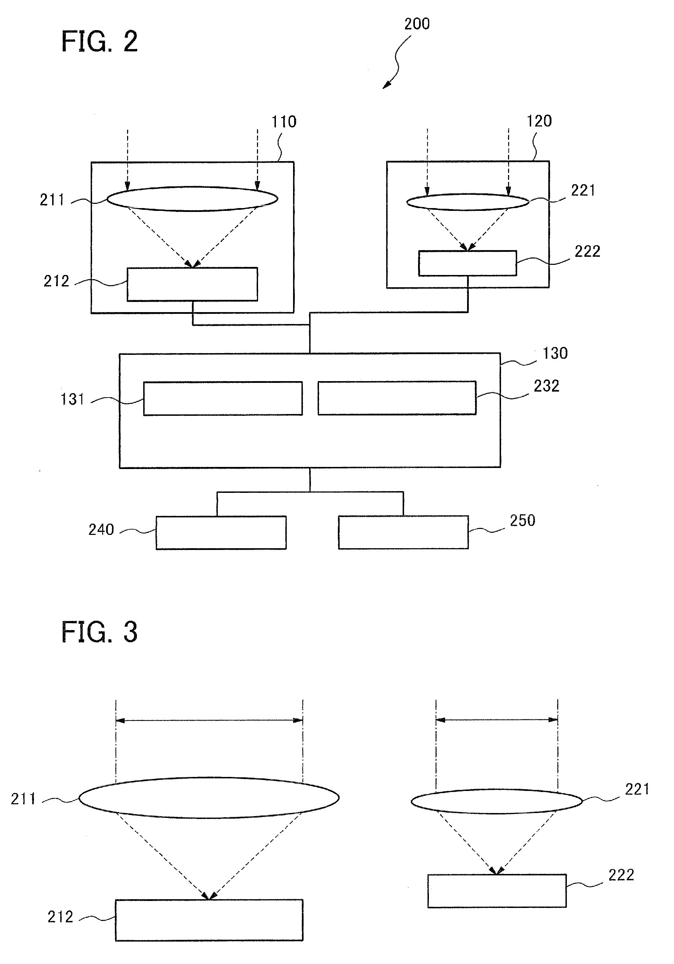

Next, the second exemplary embodiment of the present invention will be described. FIG. 2 is a block diagram showing the configuration of a stereography device 200 in accordance with the second exemplary embodiment of the present invention. The stereography device 200 includes a first photographing unit 110, a second photographing unit 120 whose optical specification is different from that of the first photographing unit, and an operational processing unit 130. The first photographing unit 110 and the second photographing unit 120 respectively output a first photographed image and a second photographed image to the operational processing unit 130 with respect to a target to be photographed including an identical object. Here, the first photographed image has a first image property determined by the optical specification of the first photographing unit, and the second photographed image has a second image property determined by the optical specification of the second photographing unit. The operational processing unit 130 includes an image processing unit 131, and the image processing unit 131 performs a correction process so that a difference between the first image property and the second image property may be minimized. The configuration above is the same as that of the stereography device 100 in accordance with the first exemplary embodiment.

The first photographing unit 110 and the second photographing unit 120 in the present exemplary embodiment respectively include lens systems 211, 221 and photographing elements 212, 222, which constitute optical systems different from each other. The stereography device 200 is configured in which a display device 240 for displaying a photographed image or an on-camera image and a storage device 250 for storing the photographed image are connected to the operational processing unit 130. As a result, a photographer is able to obtain appropriate images through the right and left eyes, respectively, unaware of two different optical systems. And it becomes possible for a photographer to take 3D pictures while monitoring 3D images. A liquid crystal display device can be used as the display device 240 and a recording medium such as a memory card can be used as the storage device 250, but not limited to these. Other display devices and storage devices can be also used.

In addition, the stereography device 200 of the present exemplary embodiment is configured to include a state memory processing unit 232 for storing a correction value which is determined by a correction process performed by the image processing unit 131. A correction value can be stored in the state memory processing unit 232 at the time of the first startup or periodically. By adopting this configuration, if it is known that a correction value can be deemed to be constant, it is possible to simplify the correction process in the image processing unit 131 to achieve the reduction in a processing load. For example, once a correction value is determined for a misalignment of optical axes, the correction value can be used next time or from then on because its value changes very rarely due to the mounting structure. Therefore, the correction process can be simplified.

In order to compress a three-dimensional image to be stored in the storage device 250, an encoding processing unit may be further included in the operational processing unit 130.

Next, the correction process performed by the image processing unit 131 will be described in more detail. The image processing unit 131 performs the correction process so that a difference between the first image property and the second image property may be minimized. In the present exemplary embodiment, the image processing is performed to both or either one of the first photographed image and the second photographed image. As the correction process for minimizing the above-mentioned difference, the following processing can be used, that is, the processing for applying an image processing to the second photographed image so that the second image property may become nearly the same as the first image property, or the processing for applying an image processing to the first photographed image so that the first image property may become nearly the same as the second image property, for example.

Here, optical specifications of each photographing unit are optical design specifications including (1) an angle of view for photographing, (2) an optical axis, (3) a depth of field, (4) an aberration, and (5) color characteristics, and the like. The respective image properties are determined depending on the optical specifications of each photographing unit, and a difference arises between respective image properties due to the difference in optical specifications. Therefore, a correction process will be described below which is performed by the image processing unit 131 for each of above-mentioned optical specifications.

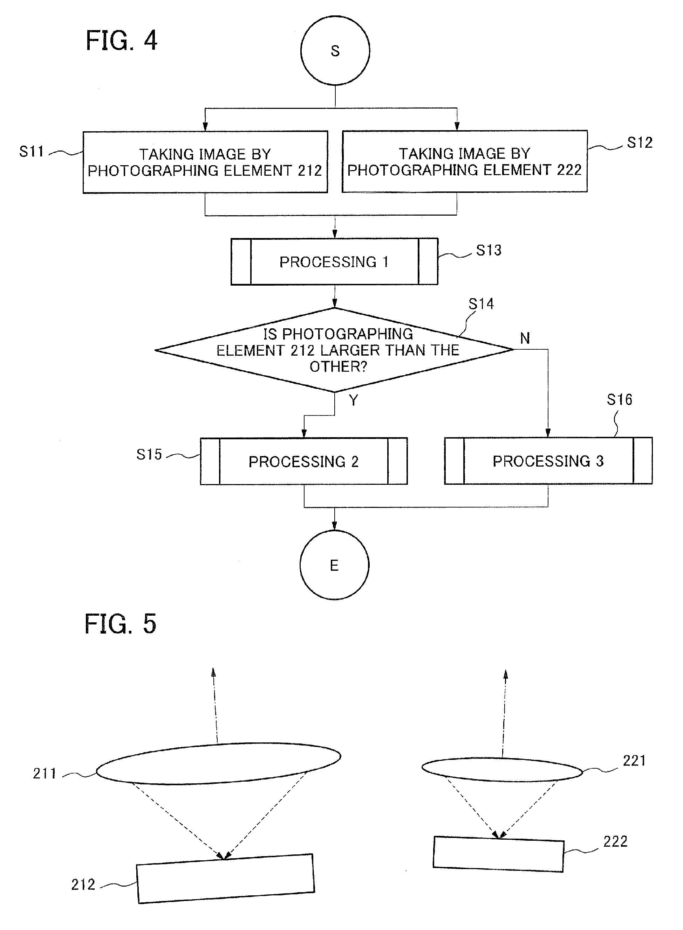

First, using FIG. 3 and FIG. 4, the process for correcting a difference in an angle of view for photographing due to a difference in lens systems or a difference in photographing elements will be described. FIG. 3 is a schematic view illustrating a difference in an angle of view for photographing, and FIG. 4 is a flowchart showing the process for correcting the differences between image properties due to the differences in lens systems and photographing elements.

As shown in FIG. 3, depending on the design of a lens system or the size of a photographing element, a photographable range differs widely. Also, depending on a difference in the number of pixels of photographing elements, a photographed range in the same pixel count is different. These differences are corrected by the image processing such as a partial cropping process and a resizing process.

Using FIG. 4, a correction process for the case where lens systems and photographing elements are different will be described. The photographing element 212 and the photographing element 222 photograph targets to be photographed including an identical object, respectively (steps S11 and S12). The image processing unit 131 scans a part of the image or the entire image with respect to each of these two images, and compares the number of pixels at each feature point. Then, a processing for enlarging or reducing an image is performed so that the difference in the sizes of the photographing elements may be compensated (step S13). A specific explanation will be given below. A case is considered in which the number of pixels of the photographing elements differs widely, for example, the number of pixels of the photographing element 212 is equal to 16M pixels, and the number of pixels of the other photographing element 222 is equal to 5M pixels. If an object whose size is 10 cm is photographed at the positions to be the same distance away from the object, for example, the image by the photographing element 212 includes 170 pixels, for example, and the image by the other photographing element 222 includes 100 pixels, for example. That is to say, images with different number of pixels will be obtained depending on a photographing element. At that time, if the images with different number of pixels are clipped without any change, they do not become equal in size to each other. Therefore, first, the processing of enlarging or reducing an image is performed so that respective images obtained by the photographing element 212 and the photographing element 222 may include the same number of pixels (100 pixels, for example) (step S13).

Next, the image processing unit 131 performs a processing of clipping a part of a picture plane. This is because even if the number of pixels is equivalent to each other, since the angle of views varies if lens systems or photographing elements are different from each other, a wider range is photographed by one photographing unit and a narrower range is photographed in the other photographing unit.

Specifically, first, the image processing unit 131 compares the sizes of the photographing element 212 and the photographing element 222 (step S14). Then, the processing, for clipping a photographing area from the wider photographing area so that the clipped area may become equal to the narrower photographing area, is performed. In other words, if the photographing element 212 is larger than the other, the image processing unit 131 clips a photographing area of the photographing element 212 so that it may become equal to that of the photographing element 222 (step S 15). On the other hand, if the photographing element 222 is larger than the other, the processing for clipping a photographing area of the photographing element 222 is performed so that it may become equal to the photographing area of the photographing element 212 (step 16).

Thus, by the processing for scaling the whole picture plane or of clipping a partial picture plane, the correction can be performed so that identical angle of views and identical image sizes (pixel counts in height and width) may be realized.

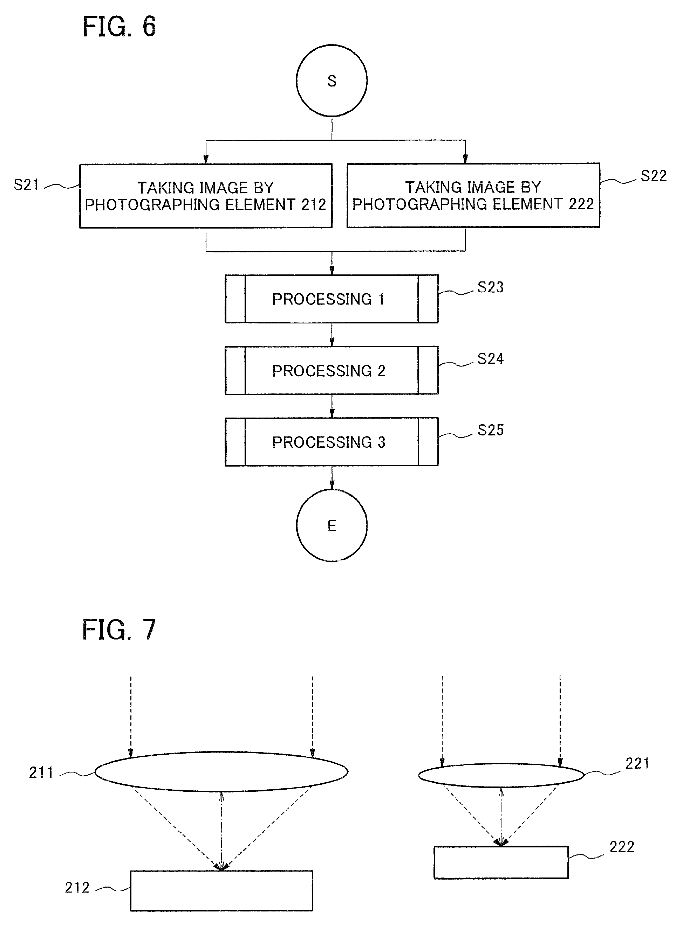

Next, using FIG. 5 and FIG. 6, the processing for correcting the misalignment in optical axes due to a difference in photographing units will be described. FIG. 5 is a schematic view illustrating a misalignment in optical axes due to a difference in photographing units, and FIG. 6 is a flowchart showing the process for correcting the difference between the image properties due to a misalignment in optical axes.

As shown in FIG. 5, a photographing unit such as a camera generally adopts a unit structure (a module) in which a lens system and a photographing element are integrated. Because a design concept and assembling accuracy of such a unit structure (a module) differ from manufacture to manufacturer, there is a possibility that optical axes, that is, the centers of targets to be photographed are misaligned. Even if a unit structure (a module) is not adopted, there is a possibility that a positional relationship between a lens system and a photographing element which have been produced by different design concept is misaligned. On the other hand, it is not desirable to produce them on mass production lines with precisely adjusting such misalignment because of increasing production costs. According to the present exemplary embodiment, a difference in photographing ranges due to a misalignment in optical axes is able to be corrected by the image processing such as a partial cropping process and a rotating process.

Using FIG. 6, a correction process for the case where a misalignment in optical axes due to a difference in photographing units will be described. The photographing element 212 and the photographing element 222 photograph targets to be photographed including an identical object, respectively (steps S21 and S22). The image processing unit 131 scans a part of the image or the entire image with respect to each of these two images, and extracts the feature point of each of them (step S23). The image processing unit 131 detects relative displacement in the positions of these feature points (step S24), and performs a deformation processing for the images so that this positional displacement may be compensated (step S25). Thus, by the processing for deforming a part of a picture plane, the correction can be performed so that the centers of the targets to be photographed may correspond with each other.

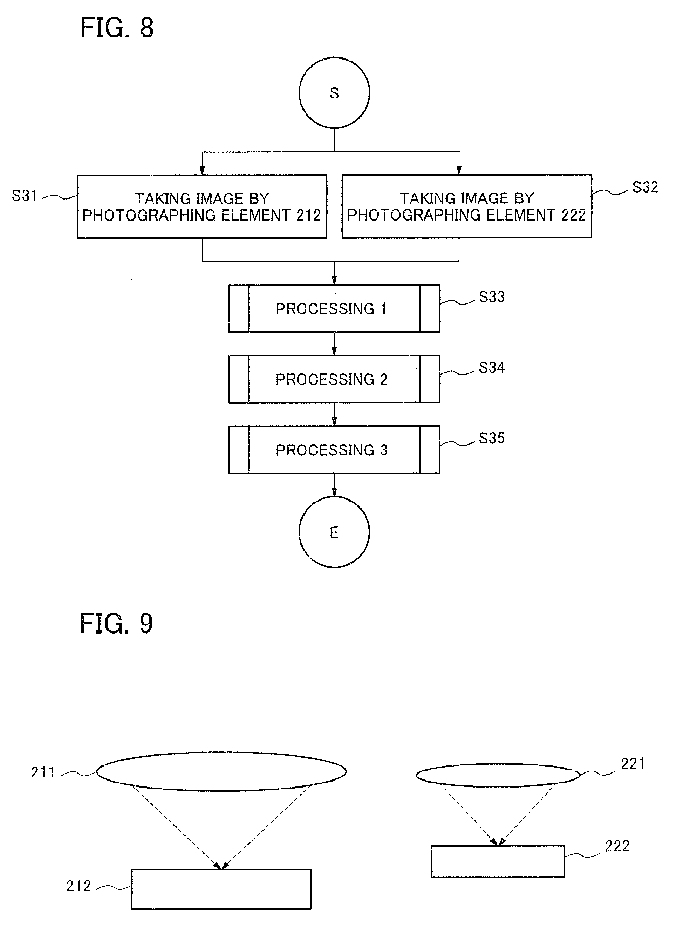

Next, using FIG. 7 and FIG. 8, the process for correcting a difference in a depth of field due to a difference in focal distances of lens systems will be described. FIG. 7 is a schematic view illustrating a difference in a depth of field due to a difference in the focal distances of lens systems, and FIG. 8 is a flowchart showing the process for correcting a difference between image properties due to a difference in depths of field.

As shown in FIG. 7, if focal distances of lens systems differ, their depths of field differ, that is, the range or distance in which it seems to be in focus is different from each other. In other words, although one photographing unit seems to be in focus, the other photographing unit seems to be out of focus. In order to eliminate this influence, the correction process is performed by applying softening processing to an image in focus.

Using FIG. 8, a correction process, for the case where a difference in depths of field arises due to a difference in focal distances of lens systems, will be described. The photographing element 212 and the photographing element 222 photograph targets to be photographed including an identical object, respectively (steps S31 and S32). The image processing unit 131 scans a part of the image or the entire image with respect to each of these two images, and extracts respective feature points (step S33). Next, the image processing unit 131 compares the contrast of pixels at these feature points, and detects an amount of defocus (step S34). Then, the image processing unit 131 performs softening processing for averaging surrounding pixels so that an image of a smaller defocus amount will match with an image of a larger defocus amount (step S35). Thus, by making the image in focus defocused by averaging surrounding images, it is possible to perform the correction to eliminate the influence due to a difference in depths of field.

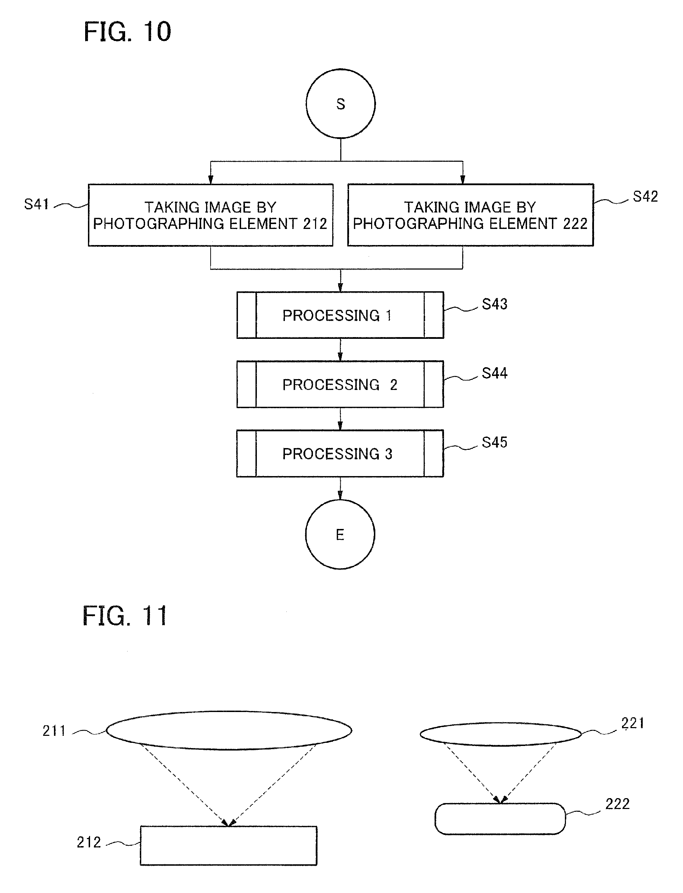

Next, using FIG. 9 and FIG. 10, the processing for correcting a difference in aberrations due to a difference in lens system structures will be described. FIG. 9 is a schematic view illustrating a difference in aberrations due to a difference in lens system structures, and FIG. 10 is a flowchart showing the process for correcting the difference between the image properties due to a difference in aberrations.

As shown in FIG. 9, by the difference in lens system structures, a difference arises in aberrations. Here, the aberrations include a spherical aberration, a distortion, astigmatism, a field curvature, a chromatic aberration, and a coma aberration, and the like. By these aberrations, a very small deformation and a spread of color arises in a photographed image. These deformations are corrected by image transformation processing, and a spread of color is corrected by performing transformation processing using different parameters for each of RGB (Red Green Blue) colors.

Using FIG. 10, a correction process for the case where a difference arises in aberrations due to a difference in lens system structures will be described. The photographing element 212 and the photographing element 222 photograph targets to be photographed including an identical object, respectively (steps S41 and S42). The image processing unit 131 scans a part of the image or the entire image with respect to each of these two images, and detects relative displacements of respective feature points in the four corners of picture planes, their centers, and intermediate points between them (step S43). Then, a geometrical deformation of an image is calculated from the amount of the displacement at each point (step S44). The image processing unit 131 corrects the positions of pixels in the whole picture plane in accordance with those calculated values (step S45). For example, the processing for fitting one of two images into the other image is performed. In the case of the chromatic aberration, the steps from S43 to S45 are performed to each of three primary colors of red, green, and blue, and the correction is performed so that the displacement of the three colors may be minimized. Thus, by performing the transformation process to at least one image among two, it is possible to perform the correction so that the influence due to the difference in aberrations may be excluded.

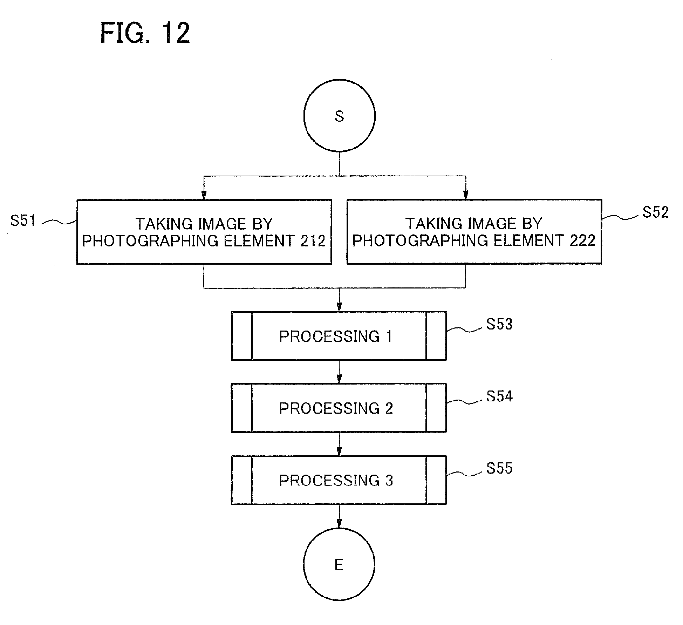

Next, using FIG. 11 and FIG. 12, the processing for correcting the difference in color properties due to a difference in photographing elements will be described. FIG. 11 is a schematic view illustrating a difference in color properties due to a difference in photographing elements, and FIG. 12 is a flowchart showing the process for correcting the difference between the image properties due to a difference in color properties.

As shown in FIG. 11, a difference arises in color properties such as brightness and a tint due to a difference in characteristics of the photographing elements 212 and 222 such as image receiving sensors, even if photograph targets including an identical object are photographed at the same time. Here, the color properties include not only colors, brightness, a resolution, a noise, and a white balance but also automatic exposure (AE) controls. With respect to colors, brightness, and a white balance among those, a color correction, a gamma correction, and a level correction are performed by the image processing, respectively. With respect to a noise, the correction is performed by processing for averaging color values, and the like. At that time, in accordance with the principle that the color and the brightness in the identical photograph target should be identical, by adjusting a tone curve of either image, it is possible to fit the color and the brightness in one of images into those in the other image. Here, a tone curve is a tool for correcting a tone of an image, and it means a curve with the original brightness (input value) on the horizontal axis and the brightness after changing (output value) on the vertical axis.

Using FIG. 12, a correction process for the case where a difference arises in color properties due to a difference in the characteristics of photographing elements will be described. The photographing element 212 and the photographing element 222 photograph targets to be photographed including an identical object, respectively (steps S51 and S52). The image processing unit 131 scans the entire image with respect to each of these two images and extracts respective histograms (step S53). A difference in specific color information is calculated from a difference between these histograms (step S54). Next, the image processing unit 131 performs the correction processing for fitting a tint in one image into it in the other image by adjusting a tone curve so that the both histograms may become identical.

As described above, according to the stereography device 200 by the present exemplary embodiment, even if various optical specifications in a plurality of imaging units differ from each other, the stereography becomes available.

### [The third exemplary embodiment]

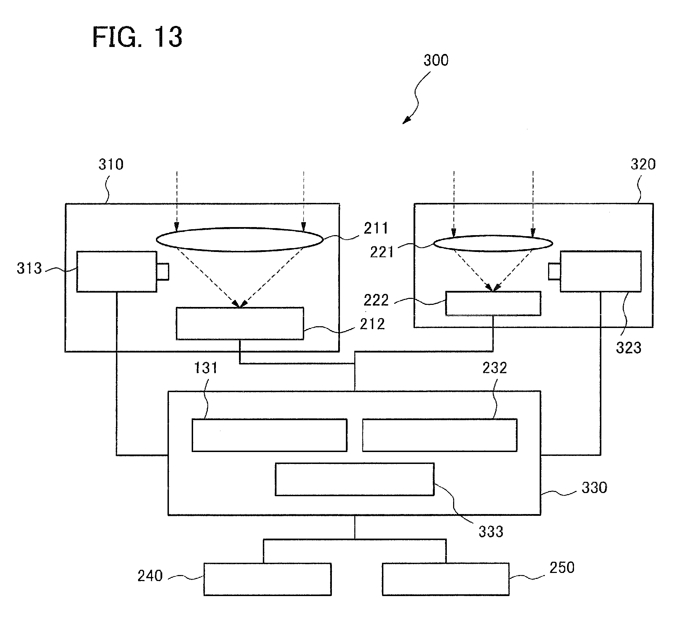

Next, the third exemplary embodiment of the present invention will be described. FIG. 13 is a block diagram showing the configuration of a stereography device 300 in accordance with the third exemplary embodiment of the present invention. The stereography device 300 includes a first photographing unit 310, a second photographing unit 320 whose optical specification is different from that of the first photographing unit, and an operational processing unit 330. The first photographing unit 310 and the second photographing unit 320 respectively output a first photographed image and a second photographed image to the operational processing unit 330 with respect to a target to be photographed including an identical object. Here, the first photographed image has a first image property determined by the optical specification of the first photographing unit, and the second photographed image has a second image property determined by the optical specification of the second photographing unit. The operational processing unit 330 includes an image processing unit 131, and the image processing unit 131 performs a correction process so that a difference between the first image property and the second image property may be minimized.

The stereography device 300 is configured in which a display device 240 for displaying a photographed image or an on-camera image and a storage device 250 for storing the photographed image are connected to the operational processing unit 330. The configuration above is similar to that of the stereography device 200 in accordance with the second exemplary embodiment.

The first photographing unit 310 and the second photographing unit 320 of the present exemplary embodiment includes autofocus control units 313 and 323, respectively, in addition to lens systems 211, 221 and photographing elements 212, 222 which constitute optical systems different from each other. At that time, control methods in the autofocus control units 313 and 323 are determined by the optical specifications of each photographing unit. In the stereography device 300 of the present exemplary embodiment, the operational processing unit 330 further includes a photography control unit 333, and the photography control unit 333 varies focus positions determined by the autofocus control units 313 and 323 on the basis of instructions by the image processing unit 131.

Next, the correction process performed by the image processing unit 131 will be described more in detail. The image processing unit 131 controls the photography control unit 333 so that the first image property may become almost identical to the second image property. That is to say, the image processing unit 131 obtains a first photographed image having varied the first image property and obtains a second photographed image having varied the second image property. In this way, it is possible to correct a difference between the image properties due to a difference in control methods in the autofocus control units 313 and 323 included in each photographing unit.

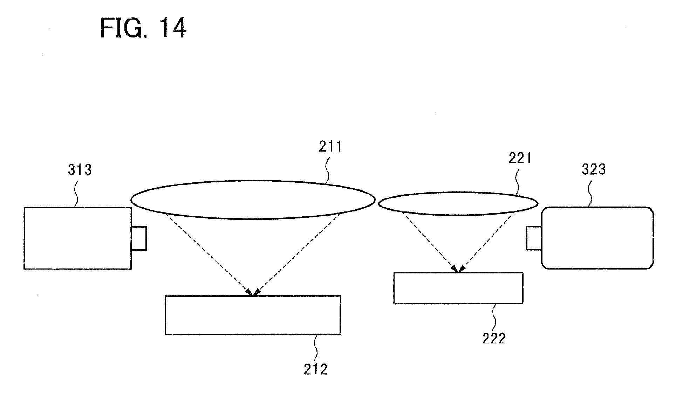

FIG. 14 is a schematic view illustrating a difference in control methods in the autofocus control units 313 and 323. A difference in focus positions by autofocus detections arises due to a difference in the control methods in the autofocus control units 313 and 323. At that time, the image processing unit 131 instructs the photography control unit 333 to move the lens system 211 included in the first photographing unit 310 by a first distance (1 mm, for example). On the other hand, the image processing unit 131 instructs it to move the lens system 221 included in the second photographing unit 320 by a second distance (1.1 mm, for example). By such control, a difference between image properties due to a difference in control methods for auto-focusing is corrected.

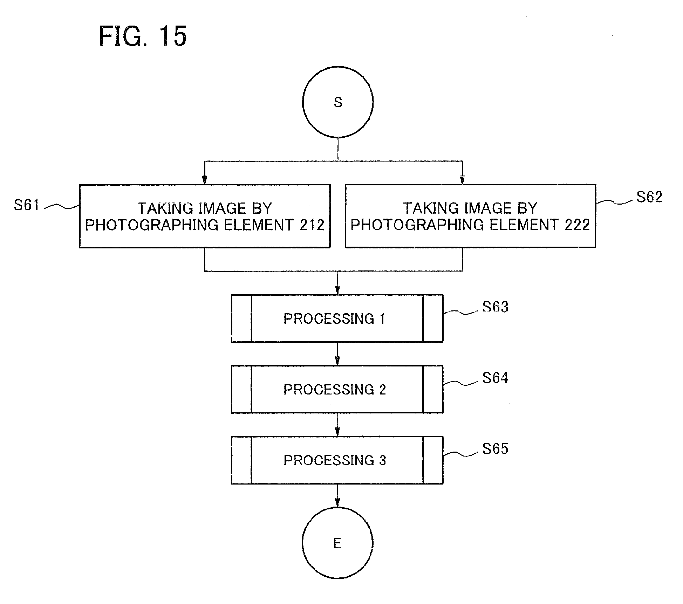

FIG. 15 is a flowchart showing the process for correcting a difference between image properties due to a difference in control methods for auto-focusing. The photographing element 212 and the photographing element 222 photograph targets to be photographed including an identical object, respectively (steps S61 and S62). The image processing unit 131 scans focusing positions of these two images (usually, near the center of a picture plane) and extracts respective contrasts (step S63). Then, a difference in the focuses is detected from a difference between the contrasts (tep S64). After that, by controlling the photography control unit 333, the image processing unit 131 performs slight adjustments by moving the focus positions determined by the autofocus control units 313 and 323 back and forth, and controls it so that the respective contrasts may become identical (step S65). At that time, it is also possible that the adjustment is performed only for the focus position determined by either one of the autofocus control units 313 and 323.

Thus, a difference between the image properties due to a difference in control methods in autofocus control units can be corrected by adjusting the focus position determined by the autofocus control unit. Accordingly, according to the stereography device 300 of the present exemplary embodiment, the stereography becomes available even if the optical specifications differ between a plurality of imaging units and the control methods in the autofocus control units are different from each other.

In the exemplary embodiments mentioned above, with respect to the process for correcting a difference between image properties due to a difference in optical specifications in the photographing units, it is described that the correction processing is performed for respective optical specifications. However, it is also available that the correction processing is performed for all of the optical specifications or is performed for the selected specifications of no smaller than two, as necessary.

The present invention is not limited to the above-mentioned exemplary embodiments and can be variously modified within the scope of the invention described in the claims. It goes without saying that these modifications are also included in the scope of the invention.

This application is based upon and claims the benefit of priority from Japanese patent application No. 2010-187017, filed on August 24, 2010, the disclosure of which is incorporated herein in its entirety by reference.

**DESCRIPTION OF THE CODES**

| | |
|---|---|
| 110, 200, 300 | stereography device |
| 100, 310 | first photographing unit |
| 120, 320 | second photographing unit |
| 130, 330 | operational processing unit |
| 131 | image processing unit |
| 211, 221 | lens system |
| 212, 222 | photographing element |
| 232 | state memory processing unit |
| 240 | display device |
| 250 | storage device |
| 313, 323 | autofocus control unit |
| 333 | photography control unit |

## Claims

1. A stereography device, comprising:
a first photographing unit;
a second photographing unit whose optical specification is different from that of the first photographing unit; and
an operational processing unit;
wherein each of the first photographing unit and the second photographing unit outputs a first photographed image and a second photographed image with respect to a target to be photographed including an identical object;
the first photographed image has a first image property determined by an optical specification of the first photographing unit;
the second photographed image has a second image property determined by an optical specification of the second photographing unit;
the operational processing unit comprises an image processing unit; and
the image processing unit performs a correction process so that a difference between the first image property and the second image property may be minimized.

2. The stereography device according to claim 1,
wherein the correction process performed by the image processing unit is a process for performing an image processing to both or either one of the first photographed image and the second photographed image.

3. The stereography device according to claim 1 or
wherein the correction process performed by the image processing unit is a processing for applying an image processing to the second photographed image so that the second image property may become nearly the same as the first image property, or a processing for applying an image processing to the first photographed image so that the first image property may become nearly the same as the second image property.

4. The stereography device according to any one of claims 1, 2, and 3,
wherein each of the first photographing unit and the second photographing unit comprises a lens system and a photographing element; and
the optical specification is an optical design specification comprises any one or more of an angle of view for photographing, an optical axis, a depth of field, an aberration, and color characteristics.

5. The stereography device according to claim 1, wherein each of the first photographing unit and the second photographing unit comprises a lens system, a photographing element, and an autofocus control unit;
the operational processing unit further comprises a photography control unit;
the photography control unit varies a focus position determined by the autofocus control unit on the basis of an instruction by the image processing unit; and
a correction process performed by the image processing unit is a processing for controlling the photography control unit so that the first image property may become almost identical to the second image property.

6. The stereography device according to claim 5, wherein the optical specification is a control method in the autofocus control unit.

7. The stereography device according to any one of claims 1, 2, 3, 4, 5, and 6,
wherein the operational processing unit further comprises a state memory processing unit; and
the state memory processing unit stores a correction value determined by the correction process.

8. A stereography method, comprising the steps of:
obtaining a first photographed image having a first image property and a second photographed image having a second image property different from the first image property, respectively, with respect to a target to be photographed comprising an identical object; and
performing a correction process so as to minimize a difference between the first image property and the second image property.

9. The stereography method according to claim 8, wherein the correction process is a process for performing an image processing to both or either one of the first photographed image and the second photographed image.

10. The stereography method according to claim 8, wherein the correction process is a process for obtaining a first photographed image having varied the first image property and obtaining a second photographed image having varied the second image property.
